# EUROPEAN PATENT APPLICATION

(11) **EP 1 574 767 A1**
(43) Date of publication of application: **14.09.2005**
(21) Application number: 05380035.5
(22) Date of filing: 25.02.2005
(51) Int. Cl.: F16K 15/06

(54) **A check valve**

(30) Priority: 11.03.2004 ES 200400597
(71) Applicant: Genebre, S.A., 08908 L'Hospitalet de Llobregat (Barcelona) (ES)
(72) Inventor: Monterde Fabregat, Lluis c/o Genebre, S.A., 08908 L'Hospitalet de Llobregat (ES)
(74) Representative: Aragones Forner, Rafael Angel

(57) **Abstract**

This valve is of the type comprising a tubular body (1) to whose inside a valve member is fitted in an axially shiftable arrangement, said valve member being resiliently biased towards its closed position. The valve member is made up by a stem (7) being guidedly shiftable in a tubular bushing (5) being arranged around said stem, through means (6) being provided on it said bushing being removably fitted to the fluid outflow open end (3) of the tubular body (1), the end of said stem facing the fluid inflow open end (2) of the tubular body (1) being enlarged and thus forming a disc-shaped head (8) being apt to close said open end.

## Description

### OBJECT OF THE INVENTION

As stated by its title, the present invention relates to a check valve.

### FIELD OF THE INVENTION

This valve is of the type comprising a tubular body being formed as a one- or two-piece member to whose inside a valve member is fitted in an axially shiftable arrangement, said valve member being resiliently biased towards its closed position and in a valve having been installed in the corresponding fluid line preventing the passage of said fluid until a given pressure causes it to open and thus allow the fluid to pass through the valve.

### BACKGROUND OF THE INVENTION

Several check valve models are already known, all of them having at each of the two opposite faces of the valve member a respective stem being apt to guide the shifting motion of said valve member through corresponding guides being provided at the open ends of the valve body, said valves normally producing turbulence and noise phenomena due to the impingement of the fluid on the surface of the guide being located at the fluid inflow open end, the seal being fitted to the valve member and thus being apt to sealingly close the valve also occasionally coming off in said valves.

### SUMMARY OF THE INVENTION

The above-mentioned problems or drawbacks and others possibly deriving from them have now been obviated with the check valve being the object of the present invention, this latter being characterised in that the valve member is made up by a stem being guidedly shiftable in a tubular bushing being arranged around said stem, through means being provided on it said bushing being removably fitted to the fluid outflow open end of the tubular body, the end of said stem facing the fluid inflow open end of the tubular body being enlarged and thus forming a disc-shaped head being apt to close said open end, the stem and the corresponding guide being provided at the fluid inflow open end in the existing valves being here inexistent, the turbulence and noise phenomena being thus avoided, the fluid inflow surface being besides increased and thus allowing to maintain the passing flow while at the same time reducing the valve's dimensions as well as its cost.

Said means being provided on the tubular bushing in order to allow it to be fitted to the fluid outflow open end of the valve body are made up by radial arms slantedly diverging towards the outside of the fluid outflow open end, said bushing and arms forming a by way of star-shaped member being at the ends of said arms threadingly engageable with said open end and having a configuration allowing the fluid flow to take place under enhanced conditions.

In order to abuttingly seal against the circular seat being provided at the fluid inflow open end of the valve body the head of the valve stem comprises a resilient sealing ring being advantageously bondedly attached through vulcanisation to the free and sealing face of said head, this not only preventing the seal from coming off but also preventing the intrusion of foreign particles normally being small sand particles between said seal and the region of the stem head to which said seal has been attached.

At its free and sealing face this head also has a central protuberance, and at the opposite face said head is as well provided with a neck being provided around the valve stem, the aforementioned protuberance being apt to laterally divert the fluid flow impinging on it and thus allowing the fluid flow through the inside of the valve to take place under enhanced conditions, the aforementioned neck being apt to delimit the shifting motion of the valve stem when the valve is caused to open.

These and other features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:

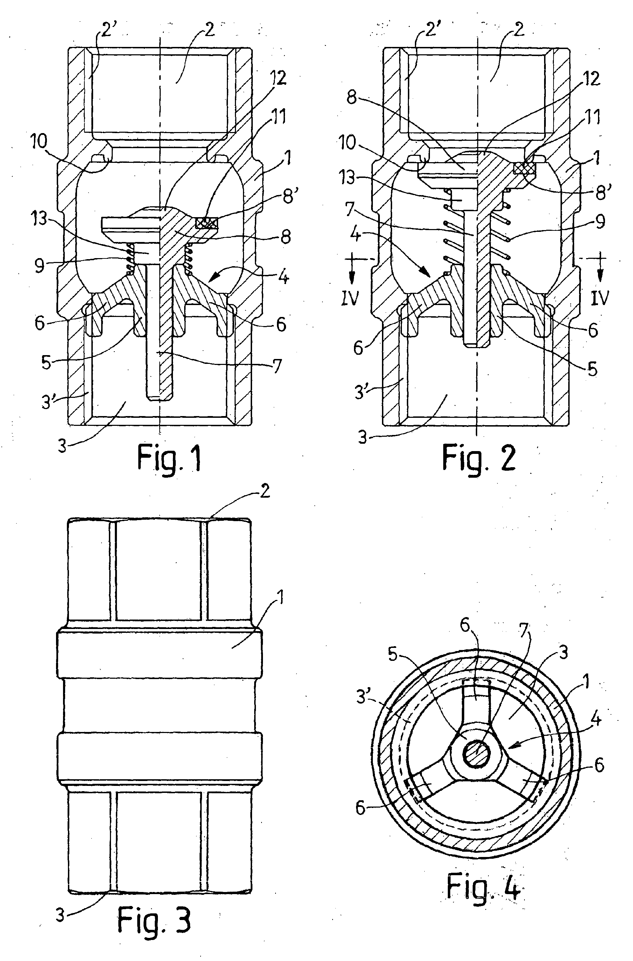

Figs. 1 and 2 are each a sectional elevation showing the check valve in question in an open and a closed position, respectively.
Fig. 3 illustrates the tubular body of the valve as seen in an elevational view.
Fig. 4 is a sectional plan-view of the valve as per the section line IV-IV in Fig. 2.

### DESCRIPTION OF AN EXEMPLARY EMBODIMENT

According to the drawings the check valve being shown in them comprises a body (1) having a tubular makeup and optionally being a one-piece member as per the illustrated embodiment, or else being made up of two pieces being fitted to each other, said body having a fluid inflow open end (2) and a fluid outflow open end (3) being arranged in an opposite arrangement, both open ends being provided with an internal thread (2') and (3').

A by way of star-shaped member (4) is threadingly fitted to the open end (3) and is formed by a tubular, central bushing (5) having several slanted, radial arms (6) (their number being of three in the example, although there can be more of them depending on the size of the valve), said fitting being carried out through the threaded ends of said arms, these latter diverging towards the outside of the open end (3).

The valve member is guidedly shiftable through the inside of the tubular bushing (5) and is made up by a stem (7) being enlarged at the end facing the open end (2), said stem thus forming a disc-shaped valve head (8) being biased by a spring (9) acting with one of its ends against said head, said spring being arranged around said stem and with its other end resting on the star-shaped member (4).

A circular seat (10) is formed at the open end (2) of the body (1), the head (8) being apt to abuttingly seal against said seat and for such a purpose being provided with a flat, peripheral sealing ring (11) at its free and sealing face, said sealing ring being bondedly attached through vulcanisation to a peripheral, ringshaped recess (8') of said head and thus being the member that is operatively caused to abuttingly seal against said seat (10).

The head (8) also has a convex, central protuberance (12) at its free and sealing face, and a neck (13) being provided around the stem (7) at the opposite face, said neck being apt to come to abuttingly rest on the tubular bushing (5) when the valve stem (7) is caused to be shifted towards its open position.

## Claims

1. A check valve comprising a tubular body (1) to whose inside a valve member is fitted in an axially shiftable arrangement, said valve member being resiliently biased towards its closed position; **characterised in that** said valve member is made up by a stem (7) being guidedly shiftable in a tubular bushing (5) being arranged around said stem, through means being provided on it said bushing being removably fitted to the fluid outflow open end (3) of the tubular body (1), the end of said stem facing the fluid inflow open end (2) of the tubular body (1) being enlarged and thus forming a disc-shaped head (8) being apt to close said open end.

2. A check valve as per claim 1, **characterised in that** the means being provided on the tubular bushing (5) in order to allow it to be fitted to the fluid outflow open end (3) of the tubular body (1) are made up by radial arms (6), these latter with the bushing (5) forming a by way of star-shaped member (4) being at the ends of said arms threadingly engageable with said open end.

3. A check valve as per claim 1, **characterised in that** in order to abuttingly seal against the circular seat (10) being provided at the fluid inflow open end (2) of the valve body (1) the head (8) of the valve stem (7) comprises a resilient sealing ring (11) being bondedly attached through vulcanisation to the free and sealing face of said head.

4. A check valve as per claim 1, **characterised in that** at its free and sealing face the head (8) of the valve stem (7) has a central protuberance (12) being apt to allow the fluid flow through the valve to take place under enhanced conditions.

5. A check valve as per claim 2, **characterised in that** the arms (6) of the tubular bushing (5) are slantedly diverging towards the outside of the fluid outflow open end (3).

6. A check valve as per claim 1, **characterised in that** at its face being opposite to its free face the head (8) of the valve stem (7) has a neck (13) being provided around said stem, said neck being apt to delimit the shifting motion of said stem towards its open position.
